# EUROPEAN PATENT SPECIFICATION

(11) **EP 2 634 879 B1**
(45) Date of publication and mention of the grant of the patent: **01.04.2015**
(21) Application number: 13380003.7
(22) Date of filing: 15.02.2013
(51) Int. Cl.: H02G 3/14

(54) **Support frame for electrical devices**
Tragerahmen für elektrische Vorrichtungen
Cadre de support pour dispositifs électriques

(30) Priority: 28.02.2012 ES 201230205 U
(43) Date of publication of application: 04.09.2013
(73) Proprietor: Simon, S.A.U., 08013 Barcelona (ES)
(72) Inventor: Moret Codina, Maria Cristina, 08021 Barcelona (ES)
(74) Representative: Espiell Volart, Eduardo Maria

(56) References cited:
- EP-A1- 0 620 620
- EP-A1- 0 620 622
- EP-A1- 1 039 608
- EP-A1- 1 467 455
- EP-A1- 1 675 233
- DE-A1- 2 452 173

## Description

### OBJECT OF THE INVENTION

The present invention relates to a support frame for electrical devices of the type comprising a body having a window or inner cavity for coupling the corresponding electrical devices and having, at opposite ends, ratchets for fixation thereof to a housing.

Said support frame has certain peculiarities aimed at enabling coupling thereof to other, similar frames, separately from the housing and subsequent mounting of the assembly on said housing.

### FIELD OF APPLICATION OF THE INVENTION

The support frame of the invention is applicable in electrical installations and, specifically, in the assembly of electrical devices (socket-outlets, switches, voice and data outlets, etc.) on a housing.

### BACKGROUND OF THE INVENTION

Surface-mounting and flush-mounting housings are widely known in the current state of the art, which are used in electrical installations for assembling different electrical devices such socket-outlets, switches, voice and data outlets, etc., establishing the assembly of each of said devices on the housing by means of the corresponding support frame.

These support frames generally have a body having a window or inner cavity for coupling the corresponding electrical device, comprising ratchets at two opposite ends for fixation to the aforementioned housing.

These support frames, once mounted on the housing, are laterally attached and fixed to said housing independently by means of the corresponding ratchets. This determines different drawbacks to the use thereof, namely that each of the support frames, with the respective electrical devices, must be assembled in an independent and individualised manner on the housing, and that the release and disassembly of each of the support frames of the housing requires the simultaneous actuation of the two opposite ratchets of the support frame for frontal extraction of the housing.

In the state of the art, worth mentioning are Patents EP 1675233 A1 (Legrand), EP 0620622 A1 (Eunea), EP 0620620 A1 (EUNEA), EP 1039608 A1 (Interlander) and DE 2452173 A1 (Giersepen), whose characteristics are similar to those mentioned earlier in this description, but in all cases the joint between the frame or the frames and the housing must be made by means of a vertical movement, while the joint described in the invention may be made by means of a swinging movement, representing a significant practical advantage for the device and for the user.

### DESCRIPTION OF THE INVENTION

The support frame for electrical devices object of the present invention, being of the type mentioned earlier, has construction peculiarities aimed at enabling the lateral association or joining of a number of support frames in accordance with the capacity of the housing, enabling the subsequent assembly of the joined support frames, in a coplanar position, preventing the relative horizontal movement thereof with respect to the corresponding housing.

Another of the objectives of the invention is to solidarily join the consecutive support frames of a single housing, preventing the individual lateral movement thereof and distributing the possible stress applied thereon over the ratchet assembly of said support frames:
Another of the objectives of the invention is to enable the easy and fast disassembly of any one of the support frames mounted on the housing, releasing only one of the ratchets of said support frame and folding back said support frame with respect to the bearing end of the opposite ratchet, simultaneously releasing from the other support frames and the housing.

To this end, the support frame of the invention comprises at least one complementary extension and one cavity on two opposite sides for joining successive support frames in a coplanar position and without possibility of relative horizontal movement by means of the vertical dovetail coupling of the respective complementary extensions and cavities.

Said extensions and cavities comprise: - corresponding lower coupling sections having formally and dimensionally coincident cross-sections, and - corresponding upper sections the side walls of which diverge toward the upper area in the case of the cavities and converge toward the upper area in the case of the extensions; said walls define an exit angle therebetween that enables the uncoupling of the consecutive support frames by means of relative folding back thereof with respect to any one of the bearing ends of the fixation ratchets that fix the support frame to the housing.

The support frame comprises, on one of its sides, at least one cavity and one extension that are aligned with the respective extension and cavity of the opposite side of the support frame. In this manner, greater stability is achieved in the joint between the successive support frames laterally related by coupling of the complementary cavities and extensions.

In a preferred embodiment the extensions and cavities, viewed from above, have a general dovetail shape, although other shapes that prevent the relative horizontal movement of the successive frames joined by the complementary extensions and cavities defined in their opposing sides are not ruled out.

### DESCRIPTION OF THE DRAWINGS

For the purpose of complementing this description and helping to better understand the characteristics of the invention, a set of drawings is attached to this specification wherein the following has been represented in an illustrative and nonlimiting manner:
- fig. 1: shows a perspective view of three support frames having the characteristics of the invention, one of which is mounted centrally on a housing and the other two are shown in an exploded view with respect to said housing;
- fig. 2: shows a top plan view of two support frames, according to the invention, attached and coupled laterally therebetween;
- fig. 3: shows a bottom plan view of the two support frames of the preceding figure in the coupling position;
- fig. 4: corresponds to the cross-section A-A' marked in figure 2, wherein the coupling area of the two consecutive support frames can be observed; and
- fig. 5: shows a view similar to that of the preceding figure during relative folding back and uncoupling of one of the support frames with respect to the consecutive support frame.

### PREFERRED EMBODIMENT OF THE INVENTION

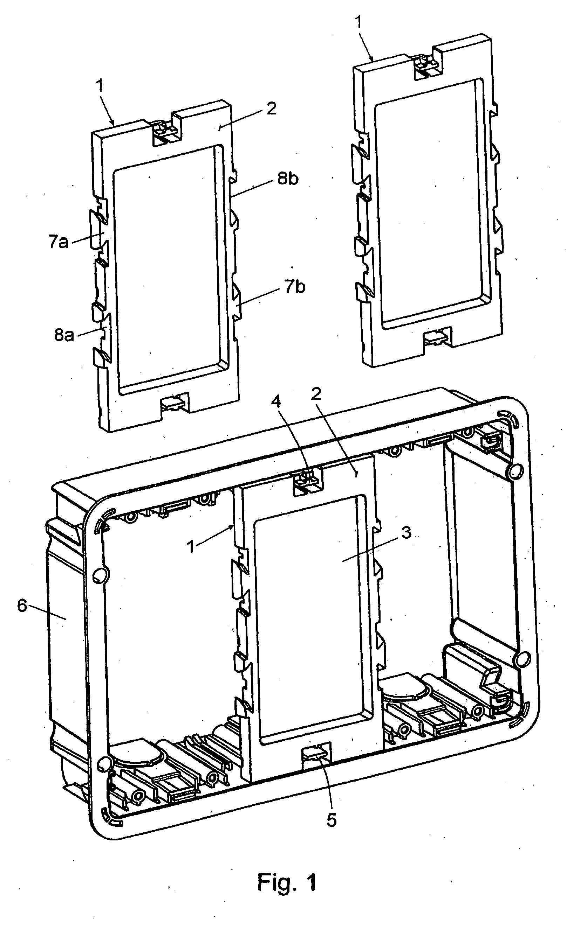

In the example shown in figure 1 three identical support frames (1) have been represented, comprising a body (2) having a window or inner cavity (3) for coupling the electrical devices not represented therein, each of said support frames (1) having ratchets (4, 5) at opposite ends for fixing to a housing (6).

In the example shown the support frames have, on one of their sides, an extension (7a) and a cavity (8a) respectively disposed in opposition to a cavity (8b) and an extension (7b) defined in the opposite side of the support frame.

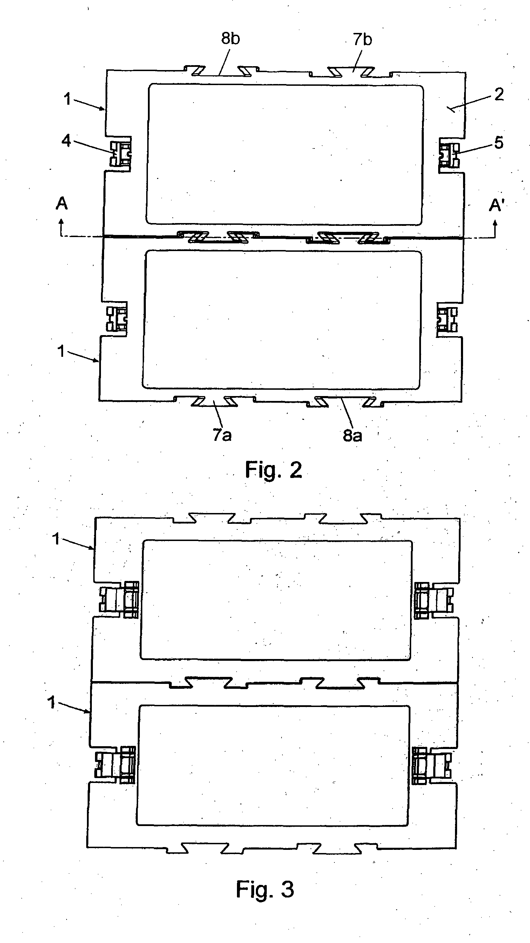

The aforementioned extensions (7a, 7b) and cavities (8a, 8b) are complementary, which allows the dovetail coupling of the opposing sides of successive frames, as observed in figures 2 and 3.

This coupling position prevents the relative movement of the support frames in a horizontal direction, i.e. along the plane defined by said support frames, but allows release thereof in a direction perpendicular or oblique to the horizontal or coupling plane.

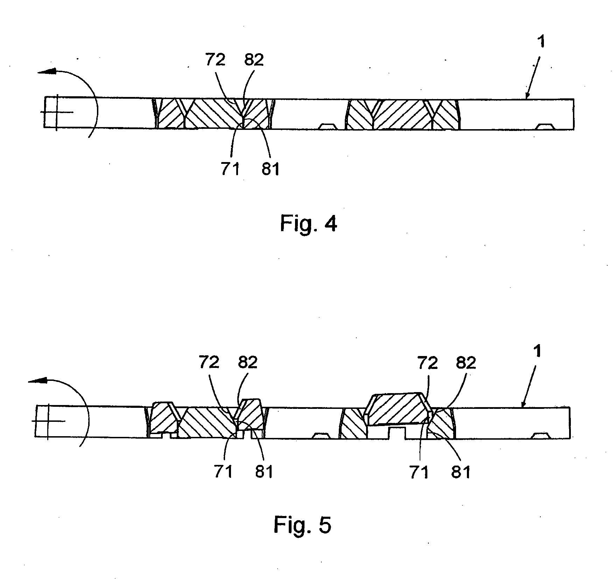

As can be observed in the attached drawings, the extensions (7a, 7b) have a lower section (71) which, viewed from above, has a cross-section that is formally and dimensionally coincident with a lower coupling section (81) defined in the cavities (8a, 8b), said lower sections fitting tightly into said lower sections (71, 81) in the coupling position of the successive support frames, as can be observed in figure 4.

The cavities (8a, 8b) have upper sections (82) that diverge toward the upper area, while the extensions (7a, 7b) have upper sections (72) that converge toward the upper area, which determines that, in the coupling position, said upper sections (72, 82) define an exit angle therebetween that enables uncoupling of the consecutive support frames (1) by folding back thereof with respect to any one of the bearing ends of the ratchets (4, 5) for fixing the support frames to the housing (6), as shown in figure 5.

In the embodiment shown in the attached figures, both extensions (7a, 7b) and cavities (8a, 8b), viewed from above, have a general dovetail shape although, as mentioned earlier, they could have other shapes, for example a "T" shape, while preserving the characteristics described and which prevent the relative horizontal movement of the support frames (1) in the coupling position.

Having sufficiently described the nature of the invention, in addition to a preferred embodiment, it is hereby stated for all purposes that the materials, shape, size and layout of the elements described may be modified, provided that it does not represent an alteration of the essential characteristics of the invention claimed hereunder.

## Claims

1. Support frame for electrical devices, said support frame (1) being of the type that is fixed to a housing (6), which support frame (1) comprises, on two opposite sides, at least one complementary extension (7a, 7b) and one cavity (8a, 8b), disposed in opposition to each other, for joining successive support frames (1) in a coplanar position., **characterised in that** the cavities (8a, 8b) have upper sections (82) that diverge toward the upper area.

2. Support frame, according to claim 1, **characterised in that** the extensions (7a, 7b) have upper sections (72) that converge toward the upper area.

3. Support frame, according to claims 1 and 2, **characterised in that** the upper sections (72, 82) define an exit angle there between that enables uncoupling of the consecutive support frames (1) by means of the relative folding back thereof.

4. Support frame, according to any of the preceding claims, **characterised in that** each of the sides of the support frame comprise at least one cavity (8a) and one extension (7a) aligned with the respective extension (7b) and cavity (8b) of the opposite side.

5. Support frame, according to any of the preceding claims, **characterised in that** the extensions (7a, 7b) and the cavities (8a, 8b), of said support frame viewed from above, have a general dovetail shape.

## Patentansprüche

1. Tragerahmen für elektrische Vorrichtungen, wobei der besagte Tragerahmen (1) so gestaltet ist, dass er an einem Gehäuse (6) befestigt ist und wobei der Tragerahmen (1) an zwei gegenüberliegenden Seiten mindestens einen ergänzenden Fortsatz (7a, 7b) und eine Vertiefung (8a, 8b) umfasst, die einander entgegengesetzt angeordnet sind, um nachfolgende Tragerahmen (1) in einer koplanaren Position zu verbinden, **dadurch gekennzeichnet, dass** die Vertiefungen (8a, 8b) obere Abschnitte (82) aufweisen, die in Richtung des oberen Bereichs auseinandergehen.

2. Tragerahmen nach Anspruch 1, **dadurch gekennzeichnet, dass** die Fortsätze (7a, 7b) obere Abschnitte (72) aufweisen, die in Richtung des oberen Bereichs zusammenlaufen.

3. Tragerahmen nach Ansprüchen 1 und 2, **dadurch gekennzeichnet, dass** die oberen Abschnitte (72; 82) einen Austrittswinkel zwischen sich definieren, der das Entkoppeln der nachfolgenden Tragerahmen (1) mittels des relativen Zurückklappens derselben ermöglicht.

4. Tragerahmen nach einem der vorhergehenden Ansprüche, **dadurch gekennzeichnet, dass** jede der Seiten des Tragerahmens mindestens eine Vertiefung (8a) und einen Fortsatz (7a) umfasst, die mit dem entsprechenden Fortsatz (7b) und der entsprechenden Vertiefung (8b) der gegenüberliegenden Seite ausgerichtet sind.

5. Tragerahmen nach einem der vorhergehenden Ansprüche, **dadurch gekennzeichnet, dass** die Fortsätze (7a, 7b) und die Vertiefungen (8a, 8b) des besagten Tragerahmens bei Betrachtung von oben eine allgemein schwalbenschwanzförmige Gestalt aufweisen.

## Revendications

1. Cadre de support pour dispositifs électriques, ledit cadre de support (1) étant du type qui est fixé à un logement (6), lequel cadre de support (1) comprenant, sur deux côtés opposés, au moins une extension complémentaire (7a, 7b) et un creux (8a, 8b) disposés en opposition l'un à l'autre, pour l'accouplement des cadres de support successifs (1) dans une position coplanaire, **caractérisé en ce que** les creux (8a, 8b) ont des sections supérieures (82) qui divergent vers la zone supérieure.

2. Cadre de support, selon la revendication 1, **caractérisé en ce gue** les extensions (7a, 7b) ont des sections supérieures (72) qui convergent vers la zone supérieure.

3. Cadre de support, selon les revendications 1 et 2, **caractérisé en ce que** les sections supérieures (72, 82) définissent un angle de sortie entre elles qui permet le désaccouplement des cadres de support consécutifs (1) au moyen du rabattement relatif de ceux-ci.

4. Cadre de support, selon l'une des revendications précédentes, **caractérisé en ce que** chacun des côtés du cadre de support comprend au moins un creux (8a) et une extension (7a) alignés à l'extension (7b) et au creux (8b) respectifs du côté opposé.

5. Cadre de support, selon l'une des revendications précédentes, **caractérisé en ce que** les extensions (7a, 7b) et les creux (8a, 8b), dudit cadre de support vu du dessus, ont une forme générale en queue d'aronde.
